# EUROPEAN PATENT APPLICATION

(11) **EP 1 251 333 A1**
(43) Date of publication of application: **23.10.2002**
(21) Application number: 01109753.2
(22) Date of filing: 20.04.2001
(51) Int. Cl.: G01C 21/26, G07C 5/08, G08G 1/052

(54) **A method and apparatus for monitoring movement of a vehicle**

(71) Applicant: CELTRAK RESEARCH LIMITED, IDA Industrial Estate, Tuam, County Galway (IE)
(72) Inventor: Rice, Kevin Joseph, Circular Road, Galway (IE)
(74) Representative: Gorman, Francis Fergus

(57) **Abstract**

A method for monitoring movement of a vehicle, the method comprising the steps of sequentially storing respective locations of a vehicle as the vehicle is moving, and storing the speed at which the vehicle is travelling at the respective locations.

## Description

The present invention relates to a method and apparatus for monitoring movement of a vehicle.

According to the invention there is provided a method for monitoring movement of a vehicle, the method comprising the steps of sequentially storing respective locations of a vehicle as the vehicle is moving, and storing the speed at which the vehicle is travelling at the respective locations.

In one embodiment of the invention the locations of the vehicle are stored at predetermined intervals, and in one embodiment of the invention at predetermined time intervals. Preferably, the times at which the locations are stored is also stored, and preferably, the date and time at which the respective locations are stored is also stored.

In one embodiment of the invention the location of the vehicle is determined through a GPS monitoring system, which preferably is on board the vehicle.

In one embodiment of the invention the speed of the vehicle is determined by reading pulses from an odometer of the vehicle. Alternatively, the speed of the vehicle is determined by the GPS monitoring system.

Preferably, the method further comprises storing the cumulative distance travelled by the vehicle between the respective times at which the location of the vehicle is stored. Advantageously, the distance travelled by the vehicle is determined by reading pulses from an odometer of the vehicle, or alternatively, by the GPS system.

In a further embodiment of the invention the method comprises reading the official speed limit for each stored location and comparing the recorded speed for each stored location against the official speed limit, and outputting a report to indicate if the vehicle was travelling within the speed limit or exceeding the speed limit.

In one embodiment of the invention the comparing of the respective stored speeds with the official speed limits and the outputting of the report is carried out remotely of the vehicle, and preferably, the stored location, speed and date and time, as well as distance travelled by the vehicle is downloaded from the vehicle to a server which comprises a comparing means and a report preparing means for facilitating comparing the respective recorded speeds of the vehicle with the speed limits for corresponding locations. Ideally, the data downloaded from the vehicle is downloaded when a vehicle returns to base, or alternatively, the data may be downloaded over a transmission link, for example, through a GSM system.

Alternatively, the comparing of the respective stored speeds with the official speed limits and the outputting of the report is carried out on board the vehicle.

In one embodiment of the invention the method comprises preparing a map of an area to be traversed by the vehicle and identifying on the map respective zones and the official speed limits pertaining to each of the respective zones. Preferably, the map is stored electronically, and ideally, is readable by electronic reading means.

In another embodiment of the invention boundaries of the respective zones identified in the map are identified by co-ordinates.

In a further embodiment of the invention the method comprises the step of commencing monitoring of the vehicle if the speed of the vehicle exceeds a predetermined level, which in one embodiment of the invention corresponds with the minimum speed limit of the speed limits in the area being traversed by the vehicle.

In a further embodiment of the invention the method comprises commencing monitoring of the vehicle on movement of the vehicle being detected during a period when the vehicle should not be moving.

Preferably, the method comprises transmitting an alert signal from the vehicle in the event that movement of the vehicle is detected during a period when the vehicle should not be moving. Advantageously, the alert signal includes the location and speed of the vehicle, and preferably, the date and time of transmission of the alert signal.

Additionally, the invention provides apparatus for monitoring movement of a vehicle, the apparatus comprising a means for monitoring the speed and location of the vehicle, a means for sequentially storing respective locations of a vehicle as the vehicle is moving, and a means for storing the speed at which the vehicle is travelling at the respective locations.

In one embodiment of the invention the means for monitoring the speed and location of the vehicle, and the means for sequentially storing respective locations of the vehicle as the vehicle is moving, and the means for storing the speed at which the vehicle is travelling at the respective locations is provided on board the vehicle.

In one embodiment of the invention the locations of the vehicle are stored at predetermined intervals, and in one embodiment of the invention at predetermined time intervals. Preferably, the apparatus further comprises a means for storing the times at which the locations are stored, and preferably, for storing the date and time at which the respective locations are stored. Preferably, the means for storing the date and time at which the respective locations are stored is provided on board the vehicle.

In one embodiment of the invention a means is provided for determining the location of the vehicle through a GPS monitoring system, and preferably, the GPS monitoring system is provided on board the vehicle.

In one embodiment of the invention a means is provided for reading pulses from an odometer of the vehicle for determining the speed of the vehicle. Alternatively, the means for determining the speed of the vehicle determines the vehicle's speed from the GPS monitoring system.

Preferably, the apparatus further comprises a means for storing the cumulative distance travelled by the vehicle between the respective times at which the location of the vehicle is stored. Advantageously, the apparatus comprises a means for determining the distance travelled by the vehicle by reading pulses from an odometer of the vehicle. Alternatively, the means for determining the distance travelled by the vehicle determines the distance using the GPS monitoring system.

In a further embodiment of the invention the apparatus comprises a means for reading the official speed limit for each stored location and a means for comparing the recorded speed for each stored location against the official speed limit, and a means for preparing and outputting a report to indicate if the vehicle was travelling within the speed limit or exceeding the speed limit is also provided.

In one embodiment of the invention the means for reading the official speed limit for each stored location, and the means for comparing the recorded speed for each stored location against the official speed limit, and the means for preparing and outputting a report to indicate if the vehicle was travelling within the speed limit or exceeding the speed limit is provided on board the vehicle.

In an alternative embodiment of the invention the means for comparing of the respective stored speeds with the official speed limits and the means for outputting the report is provided remotely of the vehicle, and preferably, a means for downloading the stored locations, speeds and dates and times, as well as distances travelled by the vehicle from the vehicle to a server is provided. Advantageously, the server comprises the comparing means and the report preparing means for facilitating comparing the respective recorded speeds of the vehicle with the speed limits for corresponding locations. Ideally, the means for downloading the data from the vehicle downloads the data when a vehicle returns to base, or alternatively, over a transmission link, for example, through a GSM system.

In one embodiment of the invention the apparatus comprises a means for preparing a map of an area to be traversed by the vehicle and identifying on the map respective zones and the official speed limits pertaining to each of the respective zones. Preferably, the map is stored electronically, and ideally, is readable by electronic reading means.

In another embodiment of the invention boundaries of the respective zones identified in the map are identified by co-ordinates.

In a further embodiment of the invention the means for storing the speed and location of the vehicle is responsive to the speed of the vehicle exceeding a predetermined level, and preferably, exceeding the minimum speed limit of the speed limits in the area being traversed by the vehicle.

In a further embodiment of the invention the means for storing the speed and location of the vehicle is responsive to movement of the vehicle being detected during a period when the vehicle should not be moving.

In one embodiment of the invention a means is provided in the vehicle for transmitting an alert signal in the event of movement of the vehicle being detected during a period when the vehicle should not be moving, and preferably, the means for transmitting the alert signal transmit the location and speed of the vehicle, and ideally, transmits the date and time of transmission of the alert signal. Advantageously, the server comprises a means for displaying the existence of the alert signal, and the data transmitted with the alert signal.

The invention will be more clearly understood from the following description of an embodiment thereof, which is given by way of example only, with reference to the accompanying drawings in which:
Fig. 1 is a block representation of apparatus according to the invention for monitoring movement of a vehicle,
Fig. 2 is a block representation of a server for carrying out analysis of the data monitored by and stored in the apparatus of Fig. 1,
Fig. 3 is a flow chart of the operation of the apparatus of Fig. 1, and
Fig. 4 is a flow chart illustrating operation of the server of Fig. 2.

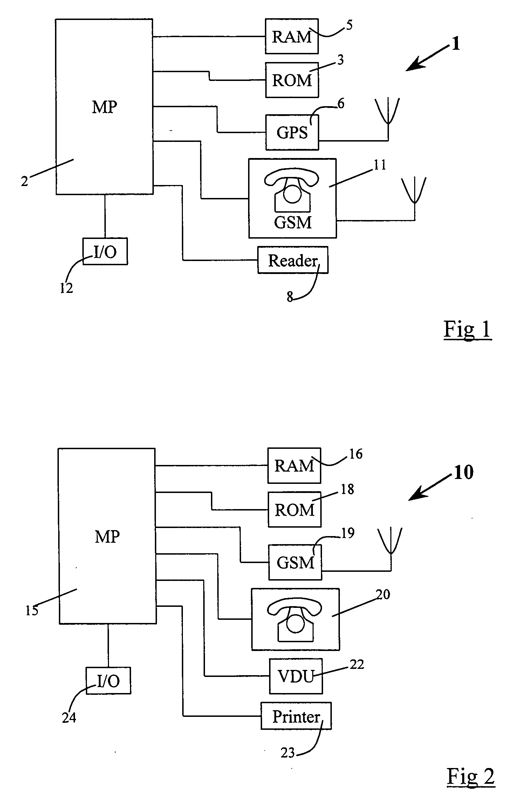

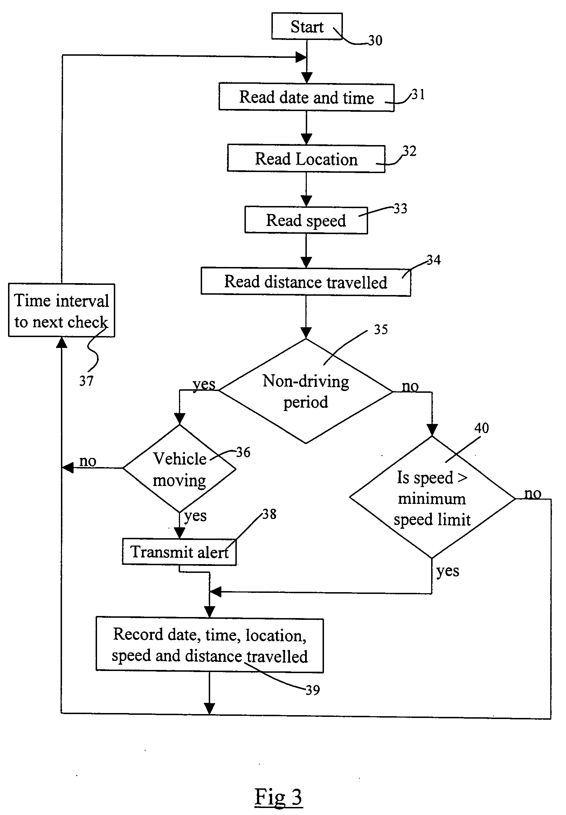

Referring to the drawings and initially to Fig. 1, there is illustrated monitoring apparatus according to the invention, indicated generally by the reference numeral 1, for monitoring movement of a vehicle, for example, a truck (not shown) as the truck traverses an area in which speed limits vary from zone to zone within the area. The apparatus 1 comprises a microprocessor 2 for controlling operation of the apparatus 1. A ROM 3 stores suitable software under which the microprocessor 2 operates, part of which will be described below with reference to Fig. 3. A RAM 5 stores monitored data as will be described below. A GPS card 6 operated under the control of the microprocessor 2 determines the co-ordinates of the location of the vehicle at predetermined time intervals. The co-ordinates of the locations are subsequently stored in the RAM 5. A reader 8 for reading pulses from an odometer (not shown) of the vehicle is also provided, and is read by the microprocessor 2 for determining the speed of the vehicle at each location and the distance travelled by the vehicle between the respective locations. The speed of the vehicle at each location, the distance travelled between respective locations, and the date and time are also stored in the RAM 5. A downloading means, namely, a transmission means for downloading data from the RAM 5 to a land based server 10 which is described below with reference to Fig. 2 comprises a mobile phone 11 which facilitates two-way communication between the apparatus 1 and the server 10 by GSM messaging. An I/O port 12 is provided to the microprocessor 2 for facilitating inputting and also downloading data between the apparatus 1 and the server 10.

Turning now to Fig. 2, the server 10 comprises a microprocessor 15 for controlling operation of the server 10. A RAM 16 stores data downloaded from the apparatus 1, as well as other data relevant to the operation of the server 10 as will be described below. A ROM 18 stores software under which the microprocessor 15 operates, some of which will be described below. A transmission means also provided by a GSM card 19 facilitates two-way communication between the apparatus 1 and the server 10 by GSM messaging. A land line telephone 20 also facilitates communication between the apparatus 1 and the server 10. A visual display unit 22 and a printer 23 are provided for facilitating display and printing of data and reports from the server 10 as will be describe below. An I/O port 24 to the microprocessor 15 facilitates inputting and downloading of data to and from the microprocessor 15 of the server 10, and also between the microprocessor 2 of the apparatus 1 and the microprocessor 15 of the server 10.

Turning now to Fig. 3, there is illustrated a flow chart of a sub-routine of software under which the microprocessor 2 of the apparatus 1 operates for monitoring movement of the vehicle and storing the monitored data. In this embodiment of the invention it is desired to monitor the movement of the vehicle at predetermined time intervals, and at the end of each time interval the date, time, location and speed of the vehicle is monitored and stored in the RAM 5. Additionally, the distance travelled as read from the odometer reader 8 between each stored location is stored in the RAM 5. In this particular embodiment of the invention it is desired that during normal working hours when the vehicle should be moving, the speed and location of the vehicle should only be stored in the RAM 5 when the vehicle speed is determined to be above the minimum speed limit in an area over which the vehicle is traversing. Furthermore, it is desired that the location and speed of a vehicle at sequential locations should be stored in the RAM 5, when the vehicle is moving at a time when the vehicle would not be expected to be moving. For example, in practice it is envisaged that the vehicle would normally be moving between the hours of 8.00 a.m. and 6.00 p.m. from Monday to Friday, inclusive, but would not normally be moving outside those hours. Additionally, an alerting signal is transmitted each time a location of the vehicle is determined, and the co-ordinates of each location are transmitted along with the alerting signal to allow the vehicle to be traced.

Block 30 of the flow chart commences operation of the sub-routine which then immediately moves to block 31. Block 31 reads the date and time from the calendar and clock of the microprocessor 2. The sub-routine then move to block 32 which reads the location of the vehicle from the GPS card 6. Block 33 of the sub-routine then reads the speed of the vehicle computed by the microprocessor 2 from pulses read from the odometer reader 8, and the sub-routine moves to block 34. Block 34 reads the distance travelled by the vehicle as determined by the microprocessor 2 from the pulses read by the odometer reader 8. The sub-routine then moves to block 35. Block 35 checks if the date and time at which the location and speed of the vehicle have been read is a time during which the vehicle should not be moving, and if it is a time during which the vehicle should not be moving, the sub-routine moves to block 36 which checks if the vehicle is actually moving. If block 36 determines that the vehicle is not moving, the sub-routine moves to block 37 which times the predetermined interval until the movement of the vehicle is to be again monitored. In this embodiment of the invention the time interval is 10 seconds. On the other hand, should block 36 determine that the vehicle is moving, the sub-routine moves to block 38 which transmits an alert signal through the mobile phone 11 for reception by the server 10 through either the land line phone 20 or the GSM card 19. The alert signal also contains the time, date, location and speed of the vehicle to facilitate tracking of the vehicle in case it is being moved by an unauthorised person. The sub-routine then moves to block 39 which stores in the RAM 5 the date and time, as well as the location and speed of the vehicle which have just been read by blocks 31, 32 and 33 and the distance moved by the vehicle since the last location which has been read by block 34, and the sub-routine moves to block 37.

Should block 35 determine that the date and time at which the location, speed and distance travelled just monitored by blocks 31 to 34 is a time in which the vehicle should be moving, the sub-routine moves to block 40. Block 40 compares the speed of the vehicle against a stored reference speed which corresponds to the minimum speed limit value of the speed limits of the area. If block 40 determines that the speed of the vehicle exceeds the minimum speed limit value of the area, the sub-routine moves to block 39, which has already been described. On the other hand, should block 40 determine that the speed of the vehicle is equal to or less than the minimum speed limit of the area, the sub-routine moves to block 37 which times the predetermined time interval until the location, speed and distance travelled by the vehicle is to be next monitored. When block 37 has timed the predetermined time interval, the sub-routine returns to block 31, and so operation of the apparatus 1 continues.

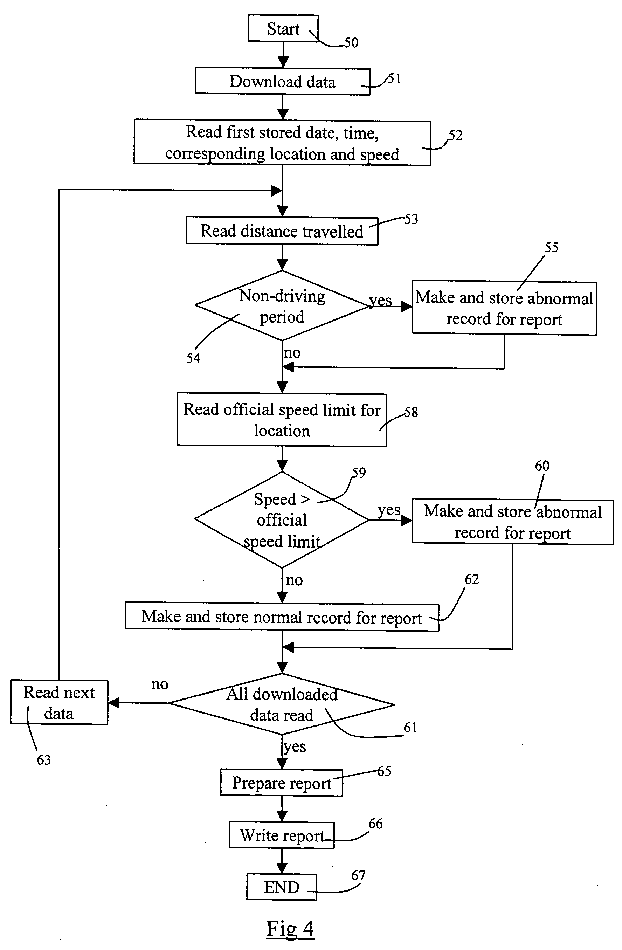

Turning now to Fig. 4, there is illustrated a flow chart of a sub-routine of software under which the server 10 of Fig. 2 operates. At appropriate intervals, for example, at the end of each day, monitored data stored in the RAM 5 of the apparatus 1 may be downloaded to the server 10 through the mobile phone 11 of the apparatus 1 and the GSM card 19 of the server 10, or alternatively, when the vehicle has returned to base, the data stored in the RAM 5 of the apparatus 1 can be downloaded through the I/O ports 12 and 24 of the apparatus 1 and the server 10, respectively. The server 10 provides reports on the monitored data downloaded from the apparatus 1 to the server 10, and in particular, the reports include information on movement of the vehicle during periods when the vehicle should not have been moving, or when it would have been expected that the vehicle should not have been moving, and also on the speed of the vehicle when the vehicle exceeded speed limits of the zones through which the vehicle passed. However, in order to provide reports on excessive speeding of the vehicle, a map of the area to be traversed by the vehicle is stored in the RAM 16 of the server 10. The map is stored in an electronically readable form for reading by the microprocessor 15, and the speed limits of zones within the area are identified. The boundaries of each of the speed limit zones are identified by a plurality of co-ordinates.

Block 50 starts the sub-routine and the sub-routine moves to block 51, which supervises the downloading of data either through the mobile phone 11 and the GSM card 19 or through the I/O ports 12 and 24. After the data has been downloaded from the RAM 5 of the apparatus 1, the sub-routine moves to block 52 which reads the first stored date and time, and the corresponding location and speed of the vehicle. The sub-routine then moves to block 53 which reads the distance travelled since the last stored location, or in the case of the first stored location, block 53 reads the distance travelled since the vehicle commenced its journey. The sub-routine then moves to block 54 which checks if the stored date and time is a date and time when the vehicle should not be moving. If so, the software moves to block 55, which makes and stores an abnormal record for inclusion in a report to be subsequently printed. The abnormal record records the date and time, the location of the vehicle at the date and time and the speed at which the vehicle was travelling. The distance travelled as read by block 53 is also included in the record for the report. The sub-routine then moves to block 58 which is described below.

Should block 54 determine that the time and date is a time and date at which the vehicle should have been moving, the sub-routine moves to block 58 which reads the official speed limit for the location from the speed limit map stored in the RAM 16, and the sub-routine moves to block 59. Block 59 compares the recorded speed of the vehicle with the official speed limit corresponding to the location, and if the vehicle's speed exceeds the official speed limit, the sub-routine moves to block 60. Block 60 makes and stores an abnormal report which contains the date, time, location and speed of the vehicle for including in the report to be printed out, and block 60 also records the distance travelled as read by block 53. The sub-routine then moves to block 61 which is described below. On the other hand, should block 59 determine that the speed of the vehicle is less than or equal to the official speed limit, the sub-routine moves to block 62 which makes and stores a normal report recording the date, time, location and speed of the vehicle for inclusion in a report to be printed out, and block 62 also records the distance travelled by the vehicle as read by block 53. The sub-routine then moves to block 61 which checks if all monitored data which had been downloaded under block 51 has been read. If not, the sub-routine moves to block 63 which reads the next stored date, time and corresponding location and speed of the vehicle. The sub-routine then returns to block 53 which reads the distance travelled by the vehicle since the last stored location. On the other hand, should block 62 determine that all downloaded data has been read, the sub-routine moves to block 65 which prepares a report based on the stored records of blocks 55, 60 and 62. The sub-routine then moves to block 66 which operates the printer 23 to print out the report, and the sub-routine then moves to block 67 which ends the sub-routine. The report may be viewed on the visual display unit 22.

Additionally, the software stored in the ROM 18 of the server 10 checks at appropriate time intervals if an alert signal has been transmitted by the apparatus 1. If so, the software is interrupted and displays the alert signal on the visual display unit 22 along with the data transmitted with the alert signal so that a person monitoring the server 10 can determine if the movement of the vehicle is an unauthorised movement, and if so, appropriate action may be taken.

The advantages of the invention are many. A particularly important advantage of the invention is that the apparatus is particularly suitable for use in fleet hiring of trucks, cars and the like. For example, in many cases billing for fleet hiring is carried out on the basis of distance travelled, and the leasing costs are based on the distance travelled by the trucks, cars or other vehicles. Thus, the fleet hiring company require the mileage travelled by each vehicle at the end of each charging period. By providing the apparatus according to the invention on board each hired vehicle, the fleet hiring company by communicating directly with the apparatus on board each vehicle can download the distance travelled during the billing period to the server 10. This function could be carried out automatically by the apparatus according to the invention on board each vehicle, such that at the end of each billing period the apparatus would automatically download the distance travelled by the vehicle to the server through the mobile phone 11 and the GSM card 19. Alternatively, a call could be initiated by the server to the apparatus on board each vehicle, and the relevant data would then be downloaded to the server in response to the call set up by the server. A further advantage of the invention is that the fleet hiring company can monitor the way each hired vehicle is driven during the period while it is hired out.

While many of the functions regarding comparing the speed of the vehicle with the speed limits of the various zones traversed by the vehicle has been described as being provided in the server, and furthermore, while other processing functions have been described as being provided in the server, such processing functions, and indeed, the report preparation could all be carried out by the apparatus according to the invention on board the vehicle, provided the on board apparatus is provided with adequate processing power.

The invention is not limited to the embodiment hereinbefore described, which may be varied in construction and detail.

## Claims

1. A method for monitoring movement of a vehicle, the method comprising the steps of sequentially storing respective locations of a vehicle as the vehicle is moving, and storing the speed at which the vehicle is travelling at the respective locations.

2. A method as claimed in Claim 1 **characterised in that** the locations of the vehicle are stored at predetermined intervals, and in one embodiment of the invention at predetermined time intervals. Preferably, the times at which the locations are stored is also stored, and preferably, the date and time at which the respective locations are stored is also stored.

3. A method as claimed in Claim 1 or 2 **characterised in that** the location of the vehicle is determined through a GPS monitoring system, which preferably is on board the vehicle.

4. A method as claimed in any preceding claim **characterised in that** the speed of the vehicle is determined by reading pulses from an odometer of the vehicle, alternatively, the speed of the vehicle is determined by the GPS monitoring system.

5. A method as claimed in any preceding claim **characterised in that** the method further comprises storing the cumulative distance travelled by the vehicle between the respective times at which the location of the vehicle is stored, and advantageously, the distance travelled by the vehicle is determined by reading pulses from an odometer of the vehicle, or alternatively, by the GPS system, and preferably, the method comprises reading the official speed limit for each stored location and comparing the recorded speed for each stored location against the official speed limit, and outputting a report to indicate if the vehicle was travelling within the speed limit or exceeding the speed limit, and preferably, the comparing of the respective stored speeds with the official speed limits and the outputting of the report is carried out remotely of the vehicle, and preferably, the stored location, speed and date and time, as well as distance travelled by the vehicle is downloaded from the vehicle to a server which comprises a comparing means and a report preparing means for facilitating comparing the respective recorded speeds of the vehicle with the speed limits for corresponding locations. Ideally, the data downloaded from the vehicle is downloaded when a vehicle returns to base, or alternatively, the data may be downloaded over a transmission link, for example, through a GSM system, alternatively, the comparing of the respective stored speeds with the official speed limits and the outputting of the report is carried out on board the vehicle, preferably, the method comprises preparing a map of an area to be traversed by the vehicle and identifying on the map respective zones and the official speed limits pertaining to each of the respective zones, and preferably, the map is stored electronically, and ideally, is readable by electronic reading means, and preferably, boundaries of the respective zones identified in the map are identified by co-ordinates.

6. Apparatus for monitoring movement of a vehicle, the apparatus comprising a means for monitoring the speed and location of the vehicle, a means for sequentially storing respective locations of a vehicle as the vehicle is moving, and a means for storing the speed at which the vehicle is travelling at the respective locations.

7. Apparatus as claimed in Claim 6 **characterised in that** the means for monitoring the speed and location of the vehicle, and the means for sequentially storing respective locations of the vehicle as the vehicle is moving, and the means for storing the speed at which the vehicle is travelling at the respective locations is provided on board the vehicle, and preferably, the locations of the vehicle are stored at predetermined intervals, and in one embodiment of the invention at predetermined time intervals, and preferably, the apparatus further comprises a means for storing the times at which the locations are stored, and preferably, for storing the date and time at which the respective locations are stored, and preferably, the means for storing the date and time at which the respective locations are stored is provided on board the vehicle, and advantageously, a means is provided for determining the location of the vehicle through a GPS monitoring system, and preferably, the GPS monitoring system is provided on board the vehicle, and preferably, a means is provided for reading pulses from an odometer of the vehicle for determining the speed of the vehicle, alternatively, the means for determining the speed of the vehicle determines the vehicle's speed from the GPS monitoring system.

8. Apparatus as claimed in claim 6 or 7 **characterised in that** the apparatus further comprises a means for storing the cumulative distance travelled by the vehicle between the respective times at which the location of the vehicle is stored, advantageously, the apparatus comprises a means for determining the distance travelled by the vehicle by reading pulses from an odometer of the vehicle, alternatively, the means for determining the distance travelled by the vehicle determines the distance using the GPS monitoring system.

9. Apparatus as claimed in Claims 6 to 8 **characterised in that** the apparatus comprises a means for reading the official speed limit for each stored location and a means for comparing the recorded speed for each stored location against the official speed limit, and a means for preparing and outputting a report to indicate if the vehicle was travelling within the speed limit or exceeding the speed limit is also provided, and preferably, the means for reading the official speed limit for each stored location, and the means for comparing the recorded speed for each stored location against the official speed limit, and the means for preparing and outputting a report to indicate if the vehicle was travelling within the speed limit or exceeding the speed limit is provided on board the vehicle, alternatively the means for comparing of the respective stored speeds with the official speed limits and the means for outputting the report is provided remotely of the vehicle, and preferably, a means for downloading the stored locations, speeds and dates and times, as well as distances travelled by the vehicle from the vehicle to a server is provided, advantageously, the server comprises the comparing means and the report preparing means for facilitating comparing the respective recorded speeds of the vehicle with the speed limits for corresponding locations, ideally, the means for downloading the data from the vehicle downloads the data when a vehicle returns to base, or alternatively, over a transmission link, for example, through a GSM system.

10. Apparatus as claimed in any of Claims 6 to 9 **characterised in that** the apparatus comprises a means for preparing a map of an area to be traversed by the vehicle and identifying on the map respective zones and the official speed limits pertaining to each of the respective zones, and preferably, the map is stored electronically, and ideally, is readable by electronic reading means, and preferably, boundaries of the respective zones identified in the map are identified by co-ordinates, and advantageously, the means for storing the speed and location of the vehicle is responsive to the speed of the vehicle exceeding a predetermined level, and preferably, exceeding the minimum speed limit of the speed limits in the area being traversed by the vehicle, and preferably, the means for storing the speed and location of the vehicle is responsive to movement of the vehicle being detected during a period when the vehicle should not be moving, and advantageously, a means is provided in the vehicle for transmitting an alert signal in the event of movement of the vehicle being detected during a period when the vehicle should not be moving, and preferably, the means for transmitting the alert signal transmit the location and speed of the vehicle, and ideally, transmits the date and time of transmission of the alert signal, and advantageously, the server comprises a means for displaying the existence of the alert signal, and the data transmitted with the alert signal.
